# EUROPÄISCHE PATENTSCHRIFT

(11) **EP 1 795 065 B1**
(45) Veröffentlichungstag und Bekanntmachung des Hinweises auf die Patenterteilung: **27.05.2009**
(21) Anmeldenummer: 06124968.6
(22) Anmeldetag: 29.11.2006
(51) Int. Cl.: A01F 15/08

(54) **Ballenpresse mit einer Feuchtemesseinrichtung**
Baler with moisture measuring device
Press à balles avec dispositif de mesure de l'humidité

(30) Priorität: 10.12.2005 DE 102005059127
(43) Veröffentlichungstag der Anmeldung: 13.06.2007
(73) Patentinhaber: Deere & Company, Moline, IL 61265-8098 (US)
(72) Erfinder: Viaud, Jean, 70100, Gray (FR)
(74) Vertreter: Holst, Sönke

(56) Entgegenhaltungen:
- EP-A- 1 535 506
- DE-A1- 10 204 941
- DE-A1- 19 934 881
- US-A- 4 916 888

## Beschreibung

Die Erfindung betrifft eine Ballenpresse mit einem Rahmen und einem Pressraum zum Herstellen eines Ballens aus Erntegut, der zwei gegenüberliegende Wände aufweist, und mit zumindest einem an einer Wand des Pressraums angeordneten, mit dem aus Erntegut gebildeten Ballen zusammenwirkenden, mit einer Auswertungseinrichtung verbundenen Sensor zur Erfassung der Feuchtigkeit des Ballens.

### Stand der Technik

In der DE 23 03 109 A wird eine stationäre Strangpresse beschrieben, die eingerichtet ist, Halmgut zu Briketts zu pressen. Die Strangpresse ist mit einer eine Strangführung, die den hergestellten Strang enthält, umschließenden Feuchtigkeitsmessvorrichtung ausgestattet, welche den Wassergehalt in nicht näher beschriebener Weise z. B. durch eine Messung der Dielelektrizitätskonstanten erfassen kann. Die Feuchtigkeitsmessung erfolgt demnach stromab der eigentlichen Presse.

In der DE 32 32 746 A wird eine fahrbare Ballenpresse mit einer Feuchtigkeitsmesseinrichtung vorgeschlagen. Letztere umfasst an Niederhaltern angebrachte Feuchtigkeitsmesselektroden. Die Niederhalter befinden sich oberhalb einer Aufnehmertrommel und werden durch Federn auf das Erntegut gedrückt.

Die EP 1 029 440 A beschreibt eine landwirtschaftliche Rundballenpresse mit einer nicht näher spezifizierten Feuchtigkeitsmesseinrichtung, die sich an der Unterseite eines in der Presskammer erzeugten Ballens befindet.

Die als gattungsbildend angesehene DE 102 04 941 A schlägt eine fahrbare Rundballenpresse mit einem an einer Seitenwand der Presskammer angeordneten, kapazitiven Sensor zur Erfassung der Feuchtigkeit des Ballens vor.

Derartige fahrbare Ballenpressen werden in der Regel zu Zwecken der Ertragskartierung oder zur Steuerung der selbsttätigen Beigabe von Konservierungsmitteln mit Feuchtigkeitssensoren versehen. Als problematisch hat sich die Anbringung der Sensoren erwiesen. Die Anordnung gemäß DE 32 32 746 A hat den Nachteil, dass das gerade aufgenommene, noch nicht gepresste Gut untersucht wird, das noch relativ locker ist. Das Messergebnis wird zum großen Teil durch die Luft zwischen den Ernteguthalmen beeinflusst und ist daher nicht repräsentativ. Die Feuchtigkeitssensoren gemäß EP 1 029 440 A und DE 102 04 941 A wirken jeweils nur mit relativ kleinen Bereichen des Ballens zusammen. Die kleinen Messflächen bedingen wegen sich lokal ändernder Gutfeuchtigkeiten und variierender mechanischer Eigenschaften des Ernteguts, die zu unterschiedlichen Abständen zwischen dem Erntegut und den Sensoren führen, stark variierende Messwerte, die hohen Fehlern unterliegen. Die bekannten Sensoren haben sich somit im Einsatz nicht als sinnvoll verwendbar erwiesen.

### Aufgabe der Erfindung

Das der Erfindung zugrunde liegende Problem wird darin gesehen, eine verbesserte Ballenpresse mit einer Feuchtigkeitsmesseinrichtung bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine stationäre oder fahrbare Ballenpresse umfasst einen Rahmen, der einen Pressraum mit Wänden abstützt und/oder bildet, insbesondere mit sich vertikal und in einer Fahrtrichtung erstreckenden seitlichen Wänden. Es wird vorgeschlagen, dass der mit einer Auswertungseinrichtung verbundene Sensor zur Erfassung der Feuchtigkeit des Ballens sich über die ganze Wand des Pressraums erstreckt. Dazu kann wenigstens eine der Wände gegenüber dem Rahmen und vorzugsweise auch den übrigen Elementen des Pressraums elektrisch isoliert und mit der Auswertungseinrichtung verbunden werden. Die ganze Wand selbst ist elektrisch leitend und dient dann als Sensor zur Erfassung der Feuchtigkeit des Ernteguts. Anzumerken ist, dass die Wand nicht unbedingt die mechanische Stabilität zur Abstützung des Ballens bereitstellen muss. Sie kann auch ein dünnes Element (z. B. eine Folie) sein, das an der dem Ballen zugewandten Innenseite eines hinreichend festen Elements angebracht ist. Letzteres kann elektrisch isolierend ausgebildet sein, oder es ist metallisch und elektrisch leitend mit dem Rahmen verbunden und eine Isolierschicht zwischen der Wand und dem Element vorhanden, oder das Element ist gegenüber dem Rahmen isoliert. Entscheidend ist, dass die Wand und demnach der Sensor dem gesamten Ballen benachbart ist.

Auf diese Weise erhält man eine relativ große Fläche des Sensors, die mit dem gesamten Ballen zusammenwirkt. Dadurch wird ein Mittelwert der Feuchtigkeit des gesamten Materials des Ballens erfasst, der in wesentlich geringerem Maße von lokalen Schwankungen der Feuchtigkeit des Ernteguts und sich ändernden mechanischen Eigenschaften des Ernteguts beeinflusst wird als bei den bisherigen, relativ kleinen Sensoren. Es wird somit eine größere Genauigkeit des Messwerts erzielt.

In einer bevorzugten Ausführungsform erstreckt sich auch ein mit der Auswertungseinrichtung verbundener Sensor über die gesamte zweite Wand des Pressraums. Dazu kann die zweite Wand gegenüber dem Rahmen isoliert und mit der Auswertungseinrichtung verbunden werden. Es wäre alternativ denkbar, die zweite Wand elektrisch mit dem Rahmen zu verbinden und die erste Wand als ersten Sensor und den Rahmen mit der zweiten Wand als zweiten Sensor mit der Auswertungseinrichtung zu verbinden.

Der Pressraum wird an seinen anderen, neben den als Sensoren dienenden Wänden verbleibenden Begrenzungen (d. h. bei einer Rundballenpresse in radialer Richtung) vorzugsweise durch elektrisch isolierende, z. B. aus Kunststoff oder Gummi oder andere elektrisch isolierende Materialien bestehende oder mit elektrisch isolierenden Oberflächen versehene Elemente begrenzt, damit diese keinen unerwünschten Kurzschluss zwischen den Sensoren bilden. Alternativ oder zusätzlich können an den erwähnten Stellen auch elektrisch leitfähige Elemente verwendet werden, die zumindest gegenüber dem Rahmen elektrisch isoliert sind.

Die Auswertungseinrichtung kann eine elektrische Eigenschaft des Ballens erfassen, z. B. den elektrischen Widerstand zwischen den beiden Sensoren oder einem Sensor und dem Rahmen messen. Der gemessene elektrische Widerstand ist ein Maß für die Feuchtigkeit des Ballens. Alternativ oder zusätzlich kann die Kapazität zwischen den beiden Sensoren oder einem Sensor und dem Rahmen gemessen werden, die ebenfalls ein Maß für die Feuchtigkeit des Ballens ist. Bei einer Messung der Kapazität könnte(n) die Sensor(en) mit einem elektrisch isolierenden Überzug versehen sein, der bei hoher Oberflächenfeuchtigkeit des Ernteguts des Ballens einen Kurzschluss zwischen den Sensoren verhindert.

Die Erfindung kann insbesondere an Rundballenpressen mit variabler oder fester Kammergröße Verwendung finden. Sie kann aber auch an einer Rechteckballenpresse Verwendung finden, bei der die als Sensoren dienende Wand eine Seitenwand oder eine obere bzw. untere Wand sein kann. Die Erfindung kann selbstverständlich auch an Ballenpressen mit festen (nicht verstellbaren) Wänden verwendet werden.

Bei Rundballenpressen mit in seitlicher Richtung verstellbaren Wänden erfolgt die Messung der Feuchtigkeit vorzugsweise bei zusammengeführten Wänden, weil dann ein optimaler Kontakt zwischen den Sensoren und dem Ballen möglich ist.

### Ausführungsbeispiel

In den Zeichnungen ist ein nachfolgend näher beschriebenes Ausführungsbeispiel der Erfindung dargestellt. Es zeigt:
- Fig. 1: eine schematische Darstellung einer erfindungsgemäßen Ballenpresse in Seitenansicht in einer geschlossenen Stellung und
- Fig. 2: die Ballenpresse nach Figur 1 in einer Ansicht von hinten und in schematischer Darstellung.

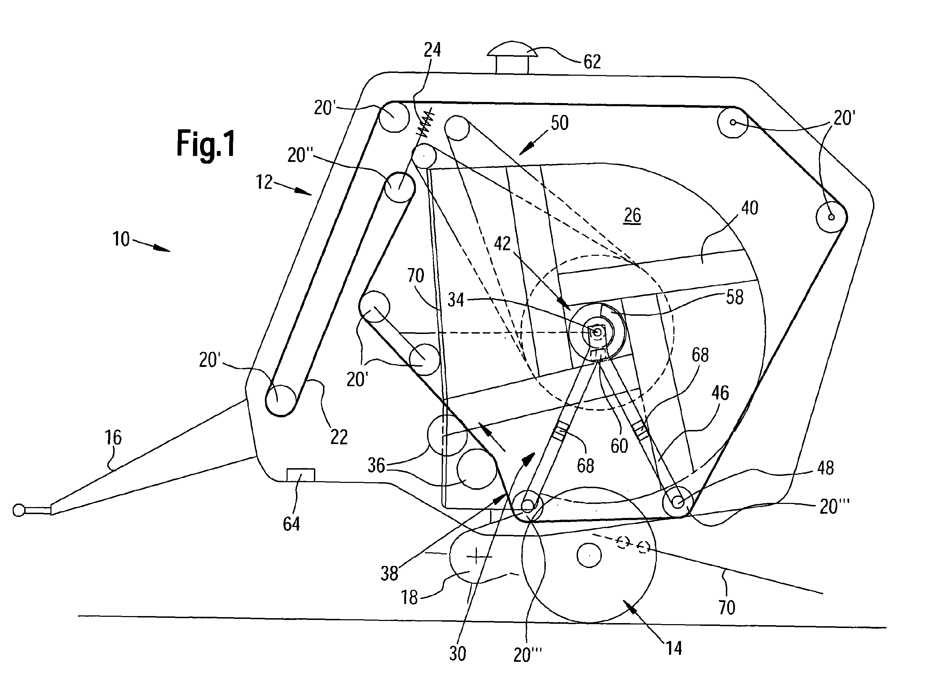

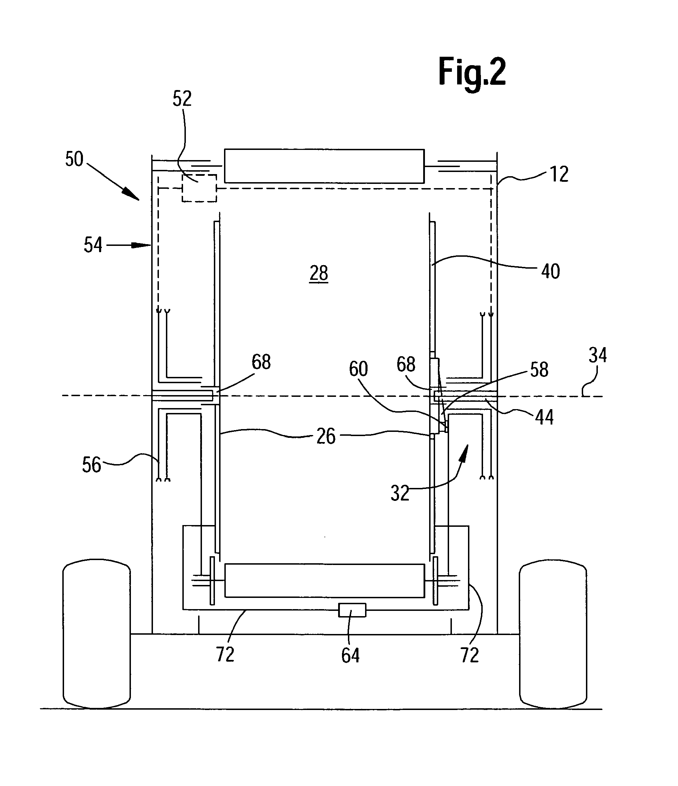

Den folgenden Ausführungen ist voranzustellen, dass sich Richtungsangaben auf die Vorwärtsbewegungsrichtung der Ballenpresse 10 beziehen, die in der Figur 1 nach links erfolgt. Die in der Figur 1 gezeigte Ballenpresse 10 umfasst einen Rahmen 12, ein Fahrgestell 14, eine Deichsel 16, eine Aufnahmevorrichtung 18, Rollen 20, Presselemente 22, eine Spannvorrichtung 24, seitliche Wände 26, einen Pressraum 28, Schwenkteile 30 und eine Drückevorrichtung 32 (s. Fig. 2).

Die Ballenpresse 10 ist in dem dargestellten Ausführungsbeispiel mit einem in der Größe veränderbaren Pressraum 28 versehen, kann aber auch mit einem größenunveränderlichen Pressraum 28 versehen werden. In dem Pressraum 28 wird vom Boden aufgenommenes Erntegut zu einem Rundballen geformt, der mit seinen Stirnseiten auf die seitlichen Wände 26 drückt.

Der Rahmen 12 ist insbesondere in Figur 2 gut zu erkennen und stellt sich als ein Schweiß- und/oder Schraubzusammenbau dar, an dem alle Komponenten der Ballenpresse 10 befestigt sind, der sich auf dem Fahrgestell 14 abstützt und der mit der Deichsel 16 an ein nicht gezeigtes Zugfahrzeug anschließbar ist. Der Rahmen 12 trägt unter anderem nicht dargestellte Verkleidungsteile, einige der Rollen 20, die seitlichen Wände 26 und die Schwenkteile 30. Der Rahmen 12 umschließt den von den seitlichen Wänden 26 und den Presselementen 22 umgebenen Bereich weiträumig.

Das Fahrgestell 14 besteht in nicht näher bezeichneter Weise aus einer Achse und Rädern, auf denen der Rahmen 12 ruht. Die Deichsel 16 greift an der Vorderseite des Rahmens 12 starr oder höhenverstellbar an.

Die Aufnahmevorrichtung 18 ist in üblicher Weise als eine so genannte Pick-Up ausgebildet und an den Rahmen 12 höhenverstellbar angeschlossen. Der Aufnahmevorrichtung 18 kann eine ebenfalls an sich bekannte Schneidvorrichtung nachgeordnet werden. Die Aufnahmevorrichtung 18 nimmt auf dem Boden abgelegtes Gut auf und gibt es über eine gegebenenfalls vorhandene Schneidvorrichtung in den Pressraum 28 weiter, in dem es zu einem zylindrischen Ballen geformt wird.

Einige der Rollen 20 sind ortsfest in dem Rahmen 12 drehbar gelagert und werden mit 20' bezeichnet. Eine andere Rolle 20" ist gegen die Kraft einer Feder 24 verstellbar, damit die Presselemente 22 dem wachsenden Ballendurchmesser nachgeben können. Wieder andere Rollen 20''' sind auf Schwenkteilen 30 um eine Schwenkachse 34 schwenkbar. Alle Rollen 20 verlaufen zueinander parallel und sind derart breit ausgebildet und so angeordnet, dass die Presselemente 22 darüber ablaufen und den Pressraum 28 umschließen können. Neben den Rollen 20 sind auch Walzen 36 vorgesehen, die sich oberhalb einer Eingangsöffnung 38 in dem Pressraum 28 befinden, als so genannte Starterrollen beim Ballenbildungsbeginn funktionieren und auf denen sich ein Teil des Gewichts des Ballens abstützen kann.

Die Presselemente 22 sind als parallel zueinander verlaufende Riemen ausgebildet, die den Pressraum 28 auf seiner Breite im Wesentlichen bedecken. Statt der Ausbildung als Riemen könnte auch eine als Stabkettenförderer oder als breites Band gewählt werden, wie dies ebenfalls bekannt ist. Die Presselemente 22 sind endlos und werden dadurch in Umlaufbewegung versetzt, dass sie reibschlüssig auf wenigstens einer antreibbaren Rolle 20' aufliegen. Die Presselemente 22 bilden im Bereich der Eingangsöffnung 38 eine Brücke, die sich mit zunehmendem Erntegut zu einer nach innen ausweitenden Schlaufe formt und den Ballen umgibt. Die Presselemente 22 werden dadurch unter Spannung gehalten, dass sie über die lageveränderliche Rolle 20" geführt werden.

Die Spannvorrichtung 24 wird in bekannter Weise dadurch gebildet, dass die Rolle 20" auf einem nicht dargestellten Arm, Schlitten oder dergleichen gegen die Kraft der Feder 24 geführt ist und stets eine Schlaufe der Presselemente 22 gespannt hält.

Die seitlichen Wände 26 nehmen in einer Ansicht auf Figur 1 im Wesentlichen die Form eines "D" ein, wobei der rückwärtige und in Figur 1 rechte Endbereich einen Bogen bildet, der im Wesentlichen der Umfangslinie des fertigen Ballens folgt, d. h. auf einem Teil eines runden Kreisbogens. Die seitlichen Wände 26 sind grundsätzlich einteilig ausgebildet, d.h. sie sind nicht wie bei herkömmlichen Ballenpressen entlang einer etwa mittigen vertikalen Ebene geteilt; sie können aber durchaus aus mehreren Teilen zusammengesetzt werden. Aus Figur 2 geht hervor, dass die seitlichen Wände 26 einen nicht unbeträchtlichen Abstand zu dem Rahmen 12 einnehmen und somit nach außen ausgelenkt werden können, wie dies nachfolgend beschrieben wird. Die seitlichen Wände 26 sind mittels Versteifungsstreben 40 biegesteif ausgebildet, wobei die Versteifungsstreben 40 aufgeschraubt oder aufgeschweißt werden können. Gemäß den Darstellungen in den Figuren 1 und 2 verlaufen die Versteifungsstreben 40 nahezu sternförmig mit Bezug auf die Schwenkachse 34 und verlaufen tangential an dieser mit geringem Abstand vorbei, um schließlich mehr oder weniger senkrecht aufeinander zu stoßen. Aufgrund dieses Verlaufs schließen sie eine in diesem Ausführungsbeispiel viereckige Kammer 42 ein. In ihrem vorderen Endbereich sind die seitlichen Wände 26 durch elektrisch isolierende Befestigungsschienen 70 mit dem Rahmen 12 im Wesentlichen fest verbunden; allerdings ist eine geringe Schwenkbewegung ausgehend von einer Lage gemäß Figur 2 um wenige Grade nach außen dadurch möglich, dass entweder die seitlichen Wände 26 im Anschlussbereich z. B. aus einem nachgiebigen Blech gebildet sind, oder in einer nachgiebigen Verbindung, z. B. an einem nachgiebigen Flansch oder an federbelasteten Schrauben festgelegt sind. Der Anschluss der seitlichen Wände 26 an dem Rahmen 12 erfolgt im Wesentlichen entlang einer mehr oder weniger vertikalen Linie am vorderen Ende des Pressraums 28. Im Bereich der Schwenkachse 34 ist jede seitliche Wand 26 über eine elektrisch isolierende Buchse 68 auf einer Achse 44 geführt, die an dem Rahmen 12 starr befestigt ist und zugleich als Schwenkachse für die Schwenkteile 30 dient.

Anders als in dem gezeigten Ausführungsbeispiel kann der Anschluss der seitlichen Wände 26 auch entlang einer oberen mehr oder weniger waagrechten oder leicht schrägen Linie erfolgen, so dass sich eine nach unten öffnende Divergenz der seitlichen Wände 26 ergibt, wenn der Ballen ausgeworfen wird.

Der Pressraum 28 ist in seiner Größe veränderlich und wird am Anfang, d. h. bei leerem Pressraum 28, von einem ungefähr dreieckigen zylindrischen Raum zwischen der Aufnahmevorrichtung 18 und dem Pressmittel 22 und seitlich von den seitlichen Wänden 26 begrenzt. Mit zunehmend zugeführtem Erntegut erweitert sich der Pressraum 28 und nimmt schließlich einen Querschnitt ein, der im rückwärtigen Bereich der Form der seitlichen Wände 26 folgt.

Die Schwenkteile 30 sind in diesem Ausführungsbeispiel auf jeder Seite mit einem oder mehreren radial zu der Schwenkachse 34 verlaufenden Arm(en) 46 und einer oder mehreren an dessen/deren radial außen liegenden Ende angebrachten quer dazu verlaufenden Traverse(n) 48 versehen. Am Ende jeder Traverse 48 ist jeweils eine Rolle 20''' vorgesehen. Die Schwenkteile 30 sind mit dem radial innen liegenden Ende jedes Arms 46 schwenkbar auf der Achse 44 angeordnet. Die Stellung der Arme 46 wird mittels eines Antriebs 50 gesteuert, der einen Motor 52 und pro Schwenkteil 30 ein Zugmittelgetriebe 54 oder einen sonstigen Schwenkantrieb enthält. Die Schwenkteile 30 könnten auch durch gemeinsame Schwenkantriebe synchron angetrieben werden bzw. starr miteinander verbunden sein, so dass nur ein einziger Schwenkantrieb erforderlich ist. Der Motor 52 kann in seinen jeweiligen Stellungen gebremst werden und hält die Arme 46 entsprechend ortsfest. Den jeweiligen Zugmittelgetrieben 54 zugehörige Abtriebsräder 56 sind konzentrisch zueinander und zu der Achse 44 gelagert und drehfest mit jeweils einem Schwenkteil 30 verbunden. Die Steuerung der Schwenkteile 30 erfolgt derart, dass der vordere Schwenkteil 30 während der Ballenbildungsphase verstellt wird, um bei der Bildung eines Ballenkerns zu helfen, und dass der vordere Schwenkteil 30 eine untere Lage einnimmt, während der Ballen gebildet wird, und beide Schwenkteile 30 eine obere Lage annehmen, wenn der Ballen ausgeworfen wird.

Die soweit beschriebene Ballenpresse ist im Wesentlichen in allen Einzelheiten in der EP 1 264 531 A beschrieben, deren Inhalt in diese Anmeldung einbezogen wird.

Die Drückevorrichtung 32 enthält eine ansteigende Fläche 58 und ein Folgeglied 60 und dient dazu, zum und beim Auswerfen des Ballens den Druck und damit die Reibung der seitlichen Wände 26 auf dessen Stirnflächen zu verringern, so dass der Ballen leichter aus dem Pressraum 28 entladen werden kann.

Die ansteigende Fläche 58 ist auf einem zu der Schwenkachse 34 konzentrisch verlaufenden Kreisbogen gelegen und an der Außenseite beider seitlicher Wände 26 befestigt, wobei es auch ausreichend wäre, nur eine ansteigende Fläche, d. h. an einer seitlichen Wand 26 vorzusehen. In dem vorliegenden Ausführungsbeispiel ist die ansteigende Fläche 58 aus einem gebogenen Stahlkeil gebildet, der gleichmäßig ansteigend innerhalb der Kammer 42 auf die seitlichen Wände 26 aufgeschraubt ist.

Das Folgeglied 60 ist auf der der Längsmittenebene der Ballenpresse 10 zugelegenen Seite des Arms 46 des rückwärtigen Schwenkteils 30 vorgesehen und als Gleitfläche ausgebildet. Zur Minimierung der Reibung werden die Reibflächen geschmiert; alternativ kann das Folgeglied 60 auch als Rad, Rolle, Kugel oder dergleichen drehendes Glied ausgebildet werden. Das Folgeglied 60 ist derart angeordnet, dass es bei einer Drehung des Schwenkteils 30 um die Schwenkachse 34 eine runde Kreisbahn beschreibt und sich auf der ansteigenden Fläche 58 bewegt. Vorzugsweisen befindet sich das Folgeglied 60 stets in Anlage auf der ansteigenden Fläche 58.

Das Folgeglied 60 liegt auf der höchsten Erhebung der ansteigenden Fläche 58 auf, wenn sich die Schwenkteile 30 in ihrer unteren Endstellung befinden - s. Figur 1 - und der Ballen erzeugt werden kann. Wenn die Schwenkteile 30 in ihre obere und in Figur 3 gezeigte Stellung gebracht werden, in der der Ballen aus dem Pressraum 28 entlassen werden kann, wird das Folgeglied 60 zu der niedrigsten Stelle der ansteigenden Fläche 58 bewegt. Der Unterschied zwischen der höchsten und der niedrigsten Stelle kann z. B. ca. 20 - 50 mm betragen.

Sobald in dem Pressraum 28 ein Ballen gebildet ist, wird der Schwenkteil 30 angehoben, worauf sich aufgrund des in dem Pressraum 28 herrschenden Drucks ausgehend von dem gepressten Erntegut die seitlichen Wände 26 nach außen bewegen. Infolgedessen verringert sich die Reibung zwischen der Innenseite der seitlichen Wände 26 und den Stirnflächen des Ballens und letzterer fällt aufgrund der Schwerkraft aus dem Pressraum 28, d.h. er rollt über den Boden des Pressraums und eine sich nach hinten daran anschließenden Abrollvorrichtung 70 auf den Boden des Feldes. Sobald der Ballen den Pressraum 28 verlassen hat und die Ballenpresse 10 soweit weiterbewegt worden ist, dass der Schwenkteil 30 wieder abgesenkt werden kann, erfolgt eine Schwenkbewegung des Schwenkteils 30 in der entgegensetzten Richtung, so dass das Folgeglied 60 zur größten Erhebung der ansteigenden Fläche 58 bewegt wird und dabei die seitlichen Wände 26 nach innen drückt.

Die Ballenpresse 10 ist zur Ertragskartierung mit einem Positionssensor 62 in Form einer GPS-Satellitenantenne ausgestattet. Er ist mit einer Auswertungseinrichtung 64 verbunden, die wiederum elektrisch durch voneinander unabhängige Leitungen 72 mit den seitlichen Wänden 26 verbunden ist. Die seitlichen Wände 26 sind, wie oben beschrieben, gegenüber dem Rahmen 12 und den übrigen, den Pressraum 28 begrenzenden Elementen (Rollen 20 und Presselementen 22, die ihrerseits isolierende Oberflächen haben) elektrisch isoliert. Die Auswertungseinrichtung 64 erfasst den elektrischen Widerstand zwischen den seitlichen Wänden 26, der ein Maß für die Feuchtigkeit des gebildeten Ballens ist. Dazu wird an die seitlichen Wände 26 eine Gleichspannung angelegt und die durch eine oder beide Leitungen 72 fließende Stromstärke erfasst. Es kann auch durch die Auswertungseinrichtung 64 die elektrische Kapazität zwischen den seitlichen Wänden 26 gemessen werden, die ebenfalls von der Feuchtigkeit des Ballens abhängt. Dazu wird beispielsweise an die seitlichen Wände 26 eine Wechselspannung angelegt und die durch eine oder beide Leitungen 72 fließende Stromstärke erfasst. Es können auch beide Messungen kombiniert (d. h. gleichzeitig oder nacheinander durchgeführt) werden, um durch eine Messung des Gleichstromwiderstands die Oberflächenfeuchtigkeit und durch Messung des Wechselstromwiderstands die Volumenfeuchtigkeit des Ballens zu erfassen. Beliebige andere Messverfahren sind möglich, s. DE 199 34 881 A und dort zitierter Stand der Technik. Bei kapazitiven Messungen können die seitlichen Wände 26 gegenüber dem Pressraum 28 isoliert sein. Durch die relativ große Messfläche der seitlichen Wände 26 wird ein Durchschnittswert der Feuchtigkeit des ganzen Ballen erfasst.

Eine Busleitung (z. B. CAN-Bus) verbindet den Positionssensor 62 mit der Auswertungseinrichtung 64. Die Auswertungseinrichtung 64 und der Positionssensor 62 könnten sich auch auf dem ziehenden Fahrzeug befinden, wobei entsprechende Software den räumlichen Versatz zwischen dem Positionssensor 62 und der Aufnahmeeinrichtung 18 berücksichtigt. Die Auswertungseinrichtung 64 erstellt beim Betrieb eine Feuchtigkeitskarte, in der die erfasste Feuchtigkeit der Ballen georeferenziert verzeichnet ist.

Beim Aufnehmen des Ernteguts vom Feld bildet sich im Pressraum 28 nach und nach ein Ballen. Hat er die gewünschte Größe erreicht, die durch einen Sensor erfasst wird, erfolgt eine oben beschriebene Messung und Registrierung der Feuchtigkeit des Ballens. Alternativ wird die gemessene Feuchtigkeit während der Bildung des Ballens kontinuierlich erfasst und registriert. Anschließend wird der Motor 52 des Antriebs 50, wie oben beschrieben, durch eine Steuerung aktiviert. Dadurch drehen sich die Schwenkteile 30 in der Figur 1 im Gegenuhrzeigersinn und die seitlichen Wände 46 bewegen sich nach außen. Der Ballen liegt zunächst (mit den dazwischen liegenden Abschnitten der Presselemente 22) auf den Rollen 20''' auf. Die vordere (in Figur 1 links eingezeichnete) Rolle 20''' rollt an der Unterseite des Ballens und dann an seiner Rückseite entlang, bis sie an seiner Oberseite zu stehen kommt. Danach wird die Heckklappe geöffnet und der Ballen ausgeworfen.

## Patentansprüche

1. Ballenpresse (10) mit einem Rahmen (12) und einem Pressraum (28) zum Herstellen eines Ballens aus Erntegut, der zwei gegenüberliegende Wände (26) aufweist, und mit zumindest einem an einer Wand (26) des Pressraums (28) angeordneten, mit dem aus Erntegut gebildeten Ballen zusammenwirkenden, mit einer Auswertungseinrichtung (64) verbundenen Sensor zur Erfassung der Feuchtigkeit des Ballens, **dadurch gekennzeichnet, dass** der Sensor sich über die ganze Wand (26) des Pressraums (28) erstreckt.

2. Ballenpresse (10) nach Anspruch 1, **dadurch gekennzeichnet, dass** die Wand (26) eine sich vertikal und in Fahrtrichtung der Ballenpresse (10) erstreckende Seitenwand ist.

3. Ballenpresse (10) nach Anspruch 1 oder 2, **dadurch gekennzeichnet, dass** ein zweiter mit der Auswertungseinrichtung (64) verbundener Sensor sich über die ganze zweite Wand (26) des Pressraums (28) erstreckt.

4. Ballenpresse (10) nach einem der Ansprüche 1 bis 3, **dadurch gekennzeichnet, dass** der Pressraum (28) in radialer Richtung durch elektrisch isolierte und/oder isolierende Elemente begrenzt wird.

5. Ballenpresse (10) nach einem der Ansprüche 1 bis 4, **dadurch gekennzeichnet, dass** die Auswertungseinrichtung (64) betreibbar ist, elektrische Eigenschaften des Ballens zu erfassen, insbesondere den Widerstand und/oder die Kapazität.

6. Ballenpresse (10) nach einem der vorhergehenden Ansprüche, **dadurch gekennzeichnet, dass** sie eine Rundballenpresse mit fester oder variabler Kammergröße ist.

7. Ballenpresse (10) nach einem der vorhergehenden Ansprüche, **dadurch gekennzeichnet, dass** die seitliche Position der Wände (26) durch einen Antrieb (50) verstellbar ist, und dass eine Messung der Feuchtigkeit bei zusammengeführten Wänden (26) erfolgt.

## Claims

1. Baler (10) with a frame (12) and a baling chamber (28) for producing a bale from harvested crop, said baling chamber having two opposite walls (26), and with at least one sensor which is arranged on a wall (26) of the baling chamber (28), interacts with the bale formed from harvested crop, is connected to an evaluation device (64) and is intended for detecting the moisture of the bale, **characterized in that** the sensor extends over the entire wall (26) of the baling chamber (28).

2. Baler (10) according to Claim 1, **characterized in that** the wall (26) is a side wall extending vertically and in the direction of travel of the baler (10).

3. Baler (10) according to Claim 1 or 2, **characterized in that** a second sensor which is connected to the evaluation device (64) extends over the entire second wall (26) of the baling chamber (28).

4. Baler (10) according to one of Claims 1 to 3, **characterized in that** the baling chamber (28) is bounded in the radial direction by electrically insulated and/or insulating elements.

5. Baler (10) according to one of Claims 1 to 4, **characterized in that** the evaluation device (64) can be operated in order to detect electric properties of the bale, in particular the resistance and/or the capacitance.

6. Baler (10) according to one of the preceding claims, **characterized in that** it is a round baler with a fixed or variable chamber size.

7. Baler (10) according to one of the preceding claims, **characterized in that** the lateral position of the walls (26) can be adjusted by a drive (50), and **in that** the moisture is measured when walls (26) are brought together.

## Revendications

1. Presse à balles (10) comprenant un cadre (12) et une chambre de pressage (28) pour fabriquer une balle de produit de récolte, qui présente deux parois opposées (26), et comprenant au moins un capteur disposé sur une paroi (26) de la chambre de pressage (28), coopérant avec la balle formée à partir du produit de récolte, connecté à un dispositif d'analyse (64), pour détecter l'humidité de la balle, **caractérisée en ce que** le capteur s'étend sur toute la paroi (26) de la chambre de pressage (28).

2. Presse à balles (10) selon la revendication 1, **caractérisée en ce que** la paroi (26) est une paroi latérale s'étendant verticalement et dans la direction de conduite de la presse à balles (10).

3. Presse à balles (10) selon la revendication 1 ou 2, **caractérisée en ce qu'**un deuxième capteur connecté au dispositif d'analyse (64) s'étend sur toute la deuxième paroi (26) de la presse à balles (28).

4. Presse à balles (10) selon l'une quelconque des revendications 1 à 3, **caractérisée en ce que** la chambre de pressage (28) est limitée dans la direction radiale par des éléments isolés et/ou isolants électriquement.

5. Presse à balles (10) selon l'une quelconque des revendications 1 à 4, **caractérisée en ce que** le dispositif d'analyse (64) peut fonctionner pour détecter des propriétés électriques de la balle, notamment la résistance et/ou la capacité.

6. Presse à balles (10) selon l'une quelconque des revendications précédentes, **caractérisée en ce qu'**il s'agit d'une presse à balles rondes avec une dimension de chambre fixe ou variable.

7. Presse à balles (10) selon l'une quelconque des revendications précédentes, **caractérisée en ce que** la position latérale des parois (26) peut être réglée par un entraînement (50) et **en ce qu'**une mesure de l'humidité a lieu lorsque les parois (26) sont réunies.
